# EUROPEAN PATENT APPLICATION

(11) **EP 4 560 274 A1**
(43) Date of publication of application: **28.05.2025**
(21) Application number: 24215322.9
(22) Date of filing: 26.11.2024
(51) Int. Cl.: G01F 25/10, F17C 5/00, F17C 5/06, G01F 1/84

(54) **VERIFICATION DEVICE FOR HYDROGEN SUPPLY STATIONS**

(30) Priority: 27.11.2023 ES 202330983
(71) Applicant: The Lean Hydrogen Company, S.L., 41927 Mairena del Aljarafe Sevilla (ES)
(72) Inventor: TRILLO LEON, Eugenio, MAIRENA DEL ALJARAFE (ES); RODRIGUEZ FERNANDEZ, Emilio Jesús, MAIRENA DEL ALJARAFE (ES); MARQUEZ GOMEZ, Daniel, MAIRENA DEL ALJARAFE (ES); ROMERO DEL POZO, Marta, MAIRENA DEL ALJARAFE (ES)
(74) Representative: Cueto, Sénida

(57) **Abstract**

Verification device for hydrogen (H₂) refuelling stations, comprising one or more H₂ tanks (1); a H₂ line (2) to the tank (1), with a first end (2.1) connected to the hose (3) of the dispenser and a second end (2.2) connected to one or more tanks (1), wherein the first end (2.1) has a nozzle (4) with means of communication with the hose (3); at least one temperature sensor (5) and a pressure sensor (6) located in the line (2); means for measuring the quantity of hydrogen and the quantity of O₂ in the H₂ supply; a control software; means for wireless communication of the software with an electronic device (12), and; a frame having means for displacement.

## Description

### Technical field of the invention

The present invention corresponds to the technical field of renewable energy technologies and the use of renewable hydrogen as an energy source for mobility, in particular in the area of verification and certification of the quality assurance of hydrogen refuelling stations (HRS).

### Background of the invention

Work is currently underway to achieve an ecological transition to a carbon-neutral economy that will lead to an improvement in environmental, social and economic terms, as well as reduce external energy dependence, improve the trade balance and move towards a modern and prosperous economy.

The European Union has established, among others, renewable energies, energy storage and renewable hydrogen, as key areas in which to strengthen its own capacities and, thereby, improve the country's strategic autonomy in order to guarantee the ecological transition and digital transformation.

At the end of 2020, the Spanish Government published the Renewable Hydrogen Roadmap. A project to transform the nation into a global benchmark in the sector.

Among the milestones to be achieved are those set out in the context of this project, which are linked to the creation by 2030 of a network of at least 100- publicly accessible hydrogen stations for refuelling vehicles, which must be distributed throughout the territory in accessible locations and with a maximum distance between them of 250 km. Today there are only around eight public and twelve private hydrogen stations, in addition to a dozen under construction, so that between 100 and 140 hydrogen stations must be installed, only in the public sector, in the period up to 2030.

Hydrogen stations have a series of components necessary for the correct and safe dispensing of hydrogen to vehicles. These include the dispenser, the hydrogen storage tank, a hydrogen production system, a compression system, etc. All these elements are validated and tested by each of their manufacturers, but a joint validation of the integration of all the components is necessary.

Checks are currently carried out by the hydrogen station operator, using his own protocols and procedures. Apart from this and the tasks set by each manufacturer for the maintenance of each of the components, there is no periodicity to validate the correct operation of all the elements as a single system.

At the moment, the validation of the hydrogen station's operating system is carried out using real hydrogen vehicles. However, this way of validating the installations has certain limitations, since on the one hand it is difficult to find commercial vehicles of this type available at the present, and on the other hand, there are the limitations of the vehicle itself, as they are not prepared since their final use does not contemplate the validation of any hydrogen installation, among other aspects, because they do not have sensors, validation protocols, fault detection, or the alarms required for verification in accordance with international standards.

Thus, this sector faces the problem of not having any equipment capable of carrying out a joint verification of the hydrogen station installations, by means of a procedure that provides reliability to the user, making it possible to simulate the refuelling of a vehicle without having to use a vehicle itself.

### Description of the invention

The verification device for hydrogen (H₂) refuelling stations, disclosed here, comprises one or more H₂ tanks, which allow the filling and storage of H₂ inside, as well as a line for the circulation of the H₂ to the tank.

This line has a first end connection to the station's H₂ dispenser hose and a second end with a connection to one or more H₂ tanks.

The first end, for its part, comprises a nozzle with means of communication with the dispenser hose.

The verification device also has at least one temperature sensor and one pressure sensor located in the line, between the first and second ends, means for measuring the quantity of H₂ and means for measuring and analyzing the results of the quantity of O₂ and humidity in the H₂ supply.

Furthermore, this device includes a control software of these elements, with analysis of the results in real time, capable of detecting deviations from the expected values and acting with the HRS if necessary, and wireless communication means between said software and an external electronic device.

On the other hand, the verification device has a support frame for the previous elements with means for displacement.

This frame allows the device to be configured as a mobile and transportable piece of equipment, allowing it to be easily loaded and unloaded onto a transport vehicle, so that it can be moved to the hydrogen station that requires verification.

The verification device for H₂ refuelling stations proposed here provides a significant improvement on the state of the art.

This is so because a mobile device for the verification and certification of the quality of the H₂ supply in hydrogen stations is obtained, analyzing key variables in the refuelling process, such as purity, pressure, speed and temperature of said refuelling, all based on international reference standards. Likewise, it also allows the sampling of refuelled H₂ for its subsequent analysis in laboratories, certifying with them the quality required from the hydrogen station.

This device is capable of enabling the rapid implementation of hydrogen stations by standardizing their certification, positioning itself as a key element n the achievement of the objectives planned in the Hydrogen Roadmap.

An important advantage of this device is that it allows the work of a certification tool and compliance with international standards to be carried out.

With this device, it is possible to prepare a set of technical documentation, protocols and procedures that, supported by this mobile verification device, allow the certification of the hydrogen station as suitable for refueling service. This is achieved by carrying out all the necessary scheduled tests with this device and having a record of the test results that provide traceability to observe possible deviations with respect to previous tests.

Another advantage is that it allows real on-site validation of refuelling stations, providing added value not only to the customer using the mobile verification device, but also to the end user, who perceives hydrogen and therefore hydrogen refuelling stations as safe and reliable places. In addition, H₂ refuelling stations with a verification device will be seen as more competitive hydrogen stations compared to the rest.

A very favorable aspect of this device is that by using it, it is possible to test hydrogen stations, trying out refuelling, without the need to use a commercial vehicle for this purpose, since the device has all the necessary components for refuelling a vehicle.

Thus, this device replicates the systems that H₂ vehicles have for refuelling, so that it is not necessary to have your own vehicle to carry out the checks. As this technology is specific to each brand, the device has technology with a different specific use in each case.

In this way, this verification device allows communication with the H₂ refuelling station through the nozzle without the need to use a hydrogen vehicle.

It is capable of monitoring the most important parameters that the hydrogen station must supply and verifying whether they are within the limits set by the most relevant standards and those required by the main car manufacturers.

Another advantage of this device is that, unlike an H₂ vehicle, this device is not a passive element, but is active in the sense that it is capable of interacting with the H₂ dispenser.

It provides an advantage for H₂ vehicle manufacturers, since the use of this verification device allows to minimize incidents in vehicles by having hydrogen stations with this certification. It also reduces the number of vehicle inspections under warranty and increases the reliability of vehicles refuelled by certified hydrogen stations.

Furthermore, for owners of hydrogen stations, the need to have components and equipment for the verification of the hydrogen station is eliminated, should the customer wishes to verify it by his own means.

A significant advantage of this device is that it has sensors, validation protocols, fault detection and alarms for verification in accordance with international standards. The device is designed to verify new H₂ refuelling stations and also to carry out periodic inspections for the renewal of the certificate in stations already in operation, in order to ensure that due to the use of the station's own components or the miscalibration of certain components there are no imbalances or failures in the system. With these periodic inspections it is possible to detect faults before they occur, providing great safety to the operation of hydrogen stations.

As an additional advantage, the H₂ tanks contained in this verification device can be used to take samples for subsequent analysis of impurities in certified laboratories, allowing more accurate conclusions to be drawn.

It is therefore a very effective verification device that allows replicating the elements of a hydrogen vehicle that are involved in refueling in order to carry out the verification without needing to use a real vehicle and with sensors that provide additional information to that obtained with the use of a vehicle as a verification element.

### Brief description of the drawings

In order to assist in a better understanding of the features of the invention, in accordance with a preferred example of a practical embodiment thereof, a series of drawings is provided as an integral part of this description, in which the following is shown for illustrative and nonlimiting purposes:
Figure 1.- Shows a diagram of the components of the verification device for hydrogen refuelling stations, for a preferred embodiment of the invention.
Figure 2.- Shows a schematic view of the components and the connections between them, of the verification device for hydrogen refuelling stations, for a preferred embodiment of the invention.

### Detailed description of a preferred embodiment of the invention

In view of the figures provided, it can be observed how in a preferred embodiment of the invention, the verification device for hydrogen (H₂) refuelling stations proposed here comprises one or more H₂ tanks (1), which allow the filling and storage of H₂ inside them.

This device has a line (2) for the circulation of H₂ to the tank (1), with a first end (2.1) for connection to the hose (3) of the H₂ dispenser of the station and a second end (2.2) with a connection to one or more H₂ tanks (1). In this preferred embodiment, a device with two H₂ tanks (1) is considered. All of this is designed and tested to replicate the characteristics of a hydrogen vehicle as closely as possible.

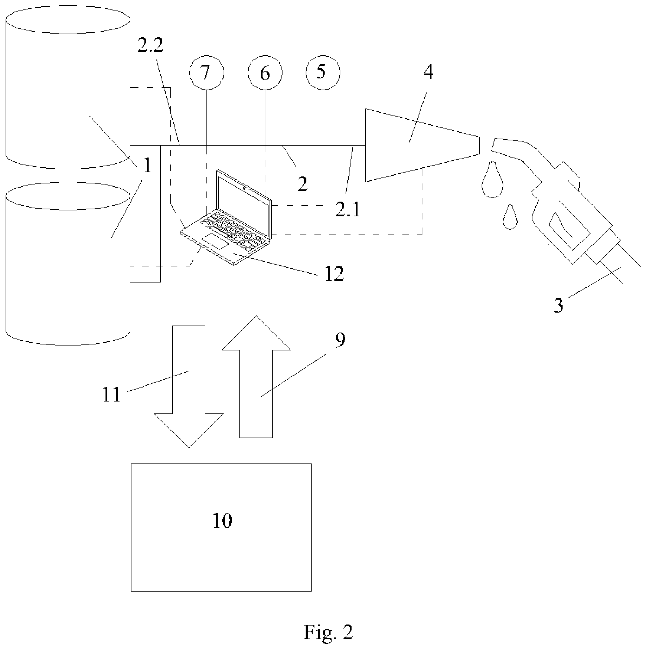

As shown in Figure 2, the first end (2.1) of the line (2) has a nozzle (4) comprising means of communication with the hose (3). In this preferred embodiment of the invention, these means of communication of the nozzle (4) with the hose (3) are formed by infrared, for real-time communication with the HRS.

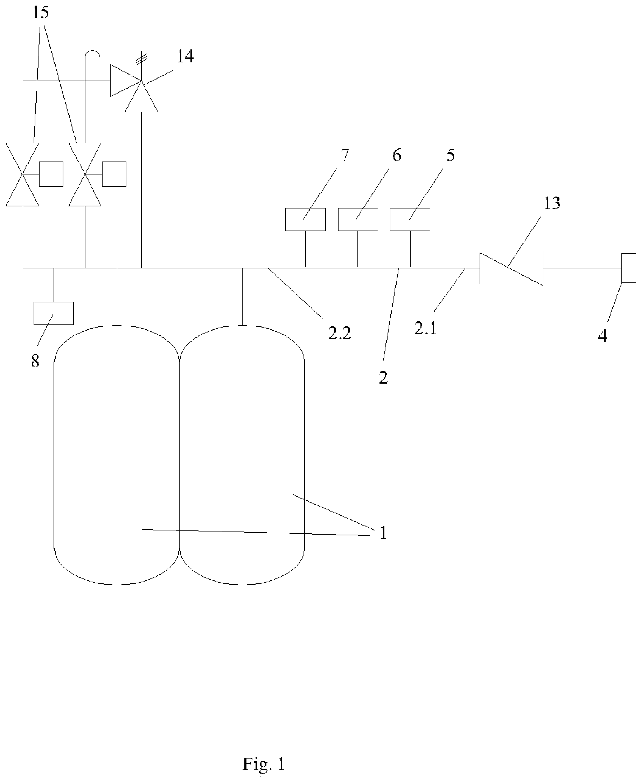

As can be seen in Figures 1 and 2, the device also comprises at least one temperature sensor (5) and one pressure sensor (6) located in the line (2), between its first and second ends (2.1, 2.2).

These sensors (5, 6) will perform an analysis of the measurements and, based on the protocols and testing procedures established by the certifying company, they will establish whether the values are appropriate or whether the hydrogen station needs some type of adjustment.

Likewise, this device has means for measuring the amount of hydrogen and means for measuring and analysing the results of the amount of O₂ and humidity in the H₂ supply.

In this preferred embodiment, the means for measuring the quantity of H₂ are formed by a Coriolis flowmeter (7) that will provide the data on the quantity of H₂ provided by the hydrogen station.

Furthermore, in this preferred embodiment of the invention, the means for measuring the quantity of O₂ are formed by an O₂ analyser (8). This measurement is necessary because the impurities that can come from hydrogen produced by renewable energies are formed of oxygen. Thus, with this analyser (8) of Oz (impurities) in the hydrogen stream, it is therefore possible to determine the quality of the hydrogen supplied.

This device also includes control software for all the defined elements. In this way, a control logic, alarm signals, as well as the necessary algorithms are established so that the protocols (9) and tests required to verify the hydrogen station can be implemented.

Furthermore, the device comprises wireless communication means of the software with an external electronic device (12), which may be formed by an ethernet or wifi network.

There is currently no legislation that allows hydrogen stations to be characterised as such. Until now, the verifiers commonly used in the automotive industry are oriented in the opposite direction, that is, to the vehicle instead of the refuelling station and are the MOTs.

It is therefore necessary to create procedures and protocols (9) based on the current regulatory status (10) and the capabilities developed for the verifier. To this end, it is necessary to analyze in detail what the tests to be carried out should refer to, that is, what the control bodies state a hydrogen station must comply with in order to be operational. Therefore, this task aims to collect the key points of these standards, both national and international, and include them in the tests or processes to be carried out during verification (11).

Based on the analysis carried out in this task, it is understood that the protocols (9) and procedures will be detailed in a more harmonized way with the hydrogen sector for mobility.

According to another aspect, the device has a support frame of the above elements that has means for displacement. This frame allows the device to be easily moved to the verification site and also to be easily transported in a transport vehicle to the hydrogen station where verification is required.

In this preferred embodiment of the invention, as shown in Figure 1, the nozzle (4) of the device comprises a non-return valve (13) to prevent hydrogen from escaping when the nozzle (4) is disconnected and to ensure correct disconnection of the nozzle.

Moreover, in this preferred embodiment, the device comprises safety means formed by a safety valve (14) and a manual or piloted outlet valve (15) connected to the line (2). The opening of both valves results in the release of hydrogen through a vent and both valves ensure that there is no risk to people or equipment in the event of hazardous events.

Furthermore, the device has all the additional valves necessary for correct operation, fittings, piping, supports, small material, wiring and all the elements necessary for it to be operational. Thus, in other embodiments it can have regulating valves, humidity analyzers, flow meters, needle valves, pressure transmitters and indicators, solenoid valves...

According to another aspect, the external electronic device (12) or communication interface, in this embodiment, is formed by a laptop in which a suitable software is implemented to communicate with the control software and thus be able to indicate what type of verification is necessary, so that the control software carries out the appropriate orders and communicates with the electronic device (12), by transferring the data obtained to it so that they are recorded in a database.

This device can be used to carry out a wide range of parameter and variable measurements and the corresponding verifications, e.g:
- Measurement of pressure tolerances
- Verification that the temperature of the ambient temperature sensor is within filling limits
- Verify that the filling tank pressure is properly monitored
- Verify that one is below the maximum flow rate
- Monitor fuel temperature (H₂)
- Measure the temperature of the H₂ inside the device that simulates the vehicle
- Verify that the dispenser has a counter for unintentional fuel stops
- Verify that the end of refuelling communication is established.
- Measurement of the maximum pressure, which can be measured with the hydrogen station dispenser sensor or with the device sensor
- Measuring the state of charge of the device

As hydrogen stations evolve, new measures and verifications can be incorporated to guarantee quality and safety conditions for both the customer and the owner of the hydrogen station.

## Claims

1. Verification device for hydrogen (H₂) refuelling stations, **characterized by** comprising:
one or more H₂ tanks (1), which allow the filling and storage of H₂ inside them;
- a line (2) for circulation of H₂ to the tank (1), with a first end (2.1) for connection to the hose (3) of the H₂ dispenser of the station and a second end (2.2) with a connection to one or more tanks (1) of H₂, where the first end (2.1) has a nozzle (4) comprising means of communication with the hose (3);
- at least one temperature sensor (5) and one pressure sensor (6) located in the line (2), between its first and second ends (2.1,2.2);
- means for measuring the amount of hydrogen, and means for measuring and analyzing the results of the amount of O₂ and moisture in the H₂ supply;
- control software for these elements, capable of performing a real-time analysis of the results and detecting deviation from predetermined values;
- means for wireless communication of the control software with an external electronic device (12), and;
- a support frame for the above elements with means for displacement.

2. Verification device according to claim 1, wherein the nozzle (4) comprises a non-return valve (13).

3. Verification device according to any of claims 1 or 2, comprising safety means formed by a safety valve (14) and a manual or piloted outlet valve (15) connected to the line (2).

4. Verification device according to any of the preceding claims, wherein the communication means of the nozzle (4) with the hose (3) are formed by infrared.

5. Verification device according to any of the preceding claims, wherein the means for measuring the quantity of H₂ are formed by a Coriolis flowmeter (7).

6. Verification device according to any of the preceding claims, wherein the means for measuring the amount of O₂ are formed by an O₂ analyzer (8).
